# EUROPEAN PATENT APPLICATION

(11) **EP 2 397 239 A1**
(43) Date of publication of application: **21.12.2011**
(21) Application number: 09800615.8
(22) Date of filing: 11.02.2009
(51) Int. Cl.: B09B 3/00, F26B 11/04, C10B 53/00

(54) **METHOD FOR PROCESSING MATERIALS IN A DRUM-TYPE APPARATUS AND A DEVICE FOR CARRYING OUT SAID METHOD**

(71) Applicant: Vil'chek, Sergei Yur'evich, Novosibirsk 630054 (RU)
(72) Inventor: Vil'chek, Sergei Yur'evich, Novosibirsk 630054 (RU)
(74) Representative: Anohins, Vladimirs
(86) International application number: PCT/RU2009/000060
(87) International publication number: WO 2010/011157

(57) **Abstract**

The invention relates to material processing, in particular to a method and a device for processing agricultural waste. The inventive method involves supplying original raw material, inert filler parts and a gas agent to a sectional drum-type apparatus provided with passage openings in the partitions between sections thereof. The apparatus is put in action and the gas agent through flow is formed through the apparatus. Each section of the drum is loaded with the inert filler parts to a level which is not lower than the edges of the passage openings in the partitions at any operating position of the drum. An active area, in which the original raw material is poured or falls at a desired rate and / or time in such a way that it moves between of the filler parts and / or the surfaces thereof, is formed on the path of the gas agent flow. Moreover, the time and / or the intensity of interaction between the original raw material and the gas agent is adjusted. The invention makes it possible to intensify the interaction between substances in the similar or different aggregate states thereof and to extend the number of processing operations and the types of materials to be processed.

## Description

### FIELD OF INVENTION

The invention relates to the field of processing agricultural waste arising from farming industry and human activity in agriculture. In particular, the invention relates to methods for recycling and processing manure, straw, sawdust and other waste and/or products potentially polluting the places where population dependent on agriculture live, thereby unfavorably affecting the health of inhabitants of small settlements, farms, shift teams and other groups of people working and/or living in substandard infrastructure areas away from technologically advanced centers. Moreover, the invention may be used for processing solid domestic waste.

### BACKGROUND OF INVENTION

It is common knowledge that agricultural waste has a serious environmental impact. A by-product of any agricultural specialization is a specific waste, which, even being per se environmentally compatible, is ecologically destructive when present in excessive amounts and excessively concentrated within a limited area. Such waste *inter alia* includes manure of livestock animals and litter thereoff, straw of grain varieties, winemaking waste, logging debris etc. Often it is unprofitable to process the waste in specialized plants because of unreasonable transportation expenses and/or high processing costs, which would result in significant rise in the cost of the main product. As a rule, it is impossible to process the waste *in situ* whether because the producers are not motivated or because of lack of proper versatile equipment capable of change-over to process a certain waste during a corresponding season, e.g., to process straw in autumn, manure in winter etc.

In many countries, bioconversion of manure into methane is widely used, but this does not solve the problem of utilization in full, as after methane has been produced, a lot of material still is left in the tanks, which material should be processed into a useful product instead of being buried. At present, the most part of equipment is focused on processing waste of a particular type, and it is assumed that a waste processor is engaged in the business professionally and has sufficient volumes of the waste to process it profitably. Such volumes can be provided, e.g., by a large cattle-ranch or poultry farm, so that the processor can produce organic fertilizers from the manure.

The problem could be solved only by developing a sufficiently versatile technology and creating equipment for performing this technology capable of processing a sufficiently wide range of types of waste, e.g., the most of the agricultural waste.

A method for processing waste and an apparatus to implement the method shall meet a number of requirements, namely:
- both the method and apparatus shall be versatile, capable of fulfilling a number of technological operations, such as drying, chopping, homogenizing, stirring, thermal treatment of various types (pyrolysis, gasification, incineration, calcinations, burning), wet treatment (including washing), chemical treatment (including reduction-oxidation, ion-exchange and substitution reactions, sorbent treatment, catalytic treatment etc.), and biological treatment (including composting) without any special redesign;
- both the method and apparatus shall guarantee the environmental safety, in order that it would not be necessary to revitalize the environment afterwards by further methods and apparatuses, which often could be more expensive;
- both the method and apparatus shall provide the economic efficiency of processing agricultural waste, which often can be provided only when the original waste is processed into marketable materials, e.g., fertilizers or compost feasible to be used in agriculture;
- both the method and apparatus shall be easily realizable and shall not need a high-skilled staff for adjustment, readjustment, process tuning, maintenance, and repair.

There is known in the prior art a method for processing inflammable municipal waste by gasification and pyrolysis thereof to produce energy and gasification products described in the RU 2150045. According to this method, the waste to be processed is loaded into a gasification reactor of a shaft-furnace type, optionally with pieces of non-inflammable and non-fusible materials facilitating the gas permeability of the load. On the opposite end of the reactor, where the accumulation of processed solid products occurs, an oxygen-containing gasifying agent is fed, and the loaded waste is subject to gasification in the gasifying agent backflow. This method is sufficiently effective for solid waste processing and heat generation.

One of the major drawbacks of the method described in the RU 2150045 is its single-purpose function that is gasification of solid waste to produce thermal energy and gasification products. It is known that farming units do not need much thermal energy during warm season, and therefore the shaft furnace would either stand idle or burn the waste ineffectively.

Another major shortcoming of the method described in the RU 2150045 is that an expensive equipment and qualified staff are needed to implement this method. Consequently, such a method could be implemented only in cities where an all year-round processing waste would be cost-effective as municipal waste are available in sufficient amounts and a necessary staff (process managers, repairers, furnace operators etc.) could be easily hired.

There is also known in the prior art a method of bulk material thermal treatment implemented in a rotary furnace described in the RU 2027134, comprising the following steps: loading a bulk material into a drum-type furnace through an axial aperture having a smaller diameter on the input end of the furnace; rotating the furnace; feeding hot gases into the furnace on its output end to warm up the material within the furnace; and discharging the material through an axial aperture having a larger diameter on the output end of the furnace. This method is rather simple from the technological point of view and does not require a complex equipment and qualified staff.

One of the major drawbacks of the method described in the RU 2027134 is its single purpose - thermal treatment of bulk materials only.

Another major drawback of the method described in the RU 2027134 is its low capacity because of low spacing factor of the drum and low efficiency of the interaction between the material and a gas flow, as in fact only the surface layer of the material is capable of interacting with the gas flow.

For the method that is the subject of the present invention, a method of drying dough-like materials according to invention described in the RU 2100721, is selected as the closest technical solution in the prior art. The method comprises the following steps: generating a pouring-off filler layer consisting of an inert material not involved in processing the fed material chemically; blowing over the filler layer with a drying agent; feeding a material to be processed onto the pouring-off filler layer; conductive-convective drying of the material; and removal of dried material from a drying zone. This method is rather simple in terms of technology and does not require any complex equipment or qualified staff.

One of the major drawbacks of the method described in the RU 2100721 is its single purpose that is drying only dough-like materials.

Another major drawback of the method described in the RU 2100721 stems from the following. The more is the mass of the filler and the higher is its temperature, the more intensive is the drying process. However, a massive filler can disintegrate the drying material during such a drying process, which is inadmissible in case of drying, e.g., seed grains.

Besides, there is known in the prior art a rotating furnace for thermal treatment of bulk materials described in the RU 2027134 comprising walls on the input and output ends of a drum, the walls being made in the form of rings mounted coaxially with the drum, the height of the ring at the input end of the furnace being greater than the height of the ring at the output end of the furnace, which provides a gravity-flowing discharge of the furnace. Thereat, the ring at the output end of the furnace has additional holes in order to provide a complete discharge of the drum. This furnace is simple from the construction point of view and does not require a qualified staff for its operation.

One of major drawbacks of the apparatus described in the RU 2027134 is its single purpose that is thermal treatment of bulk materials.

Another major drawback of the apparatus described in the RU 2027134 is that it the material is caking during the treatment, which significantly limits the abilities of the apparatus even when used for drying or warming-up the material.

Besides, there is known in the prior art a furnace for thermal treatment of pulverous materials described in the SU Inventor's Certificate No.857680 comprising ring diaphragms mounted within a heated rotating drums, the diaphragms having segment-like cut-outs in order to provide a uniform movement of the material being processed, a cut-out of each succeeding diaphragm being displaced with regard to the preceding one, which reduces the caking of the material due to its more uniform movement along the axis of the drum.

One of major drawbacks of the apparatus described in the SU 857680 is its single purpose that is warming-up bulk materials.

Moreover, it is impossible to entirely get rid of the caking of material, as the input material fed for the treatment may be non-homogeneous as to its structure, granularity, humidity, foreign inclusions etc.

As to the technical essence, the closest to the present invention is a drying assembly described in the RU 2130959 that is based on a self-discharging inclined rotating thermally insulated drum lengthwise divided into sections by annular partitions having passage openings of different diameters, said diameters increasing from an input charging unit to an output discharging unit.

To heat the ingoing material, the drum is filled with a hot inert filler, which successively overflows into each next section of the drum when its level reaches the level of a corresponding passage opening. Onto the hot filler, a slurry of utilizable material is fed, which, when dried, spills through a grid of the outer sidewall of the drum. This drying assembly is sufficiently simple and does not require a qualified staff for its operation.

One of the major drawbacks of the assembly described in the RU 2130959 is its single purpose that is drying a slurry of utilizable material in order to incinerate it in a special vertical furnace, said vertical furnace being used also to heat the inert filler necessary for the drying process. This drying assembly cannot work without such a vertical furnace.

Another major drawback of the assembly described in the RU 2130959 is that it is intended only for drying a slurry of utilizable material and cannot be used to utilize waste of other types, e.g., solid and gaseous waste.

Another major drawback of the assembly described in the RU 2130959 is that the performance of this assembly is determined by the number of bodies of the inert filler present in the drum at the same time, their capability of accumulating a certain amount of thermal energy, and the rate of circulation of the inert filler through the drum. As the number of bodies of the inert filler increases, the area of each passage opening decreases and simultaneously the average temperature within the drum decreases as well, which reduces the efficiency of drying. But increasing the area of each passage opening leads to the reduction of the number of bodies of the inert filler within the drum.

### SUMMARY OF INVENTION

The method of invention has been developed as a versatile method providing processing various materials including agricultural waste. The method is free from the drawbacks of the prior art due to that the performed processes are consistent from the technical and technological points of view. The processes are performed using a standardized equipment and differ only in process conditions determining a degree of interaction between an original raw material and gaseous, liquid or solid materials present in the drum together with the original raw material.

In a versatile method for processing materials in a sectioned drum-type apparatus, the drum being divided into sections by partitions with passage openings therein, the method comprising the steps of: feeding an original raw material, bodies of an inert filler, and a gaseous agent into the apparatus; putting the apparatus in operation; and creating a gas flow through the apparatus; the above technical result is achieved due to that the method includes the operations of: filling the sections of the apparatus, partially or entirely, with the inert filler bodies up to a level higher than the level of the passage openings; forming an active zone on the way of the gas flow, where the original raw material is dropped and/or spilled with a predetermined rate and/or during a predetermined duration, thus providing its movement in between the surfaces of the inert filler bodies and/or through the bodies themselves; and controlling the duration and/or intensity of the interaction between the original raw material and the gaseous agent.

The above embodiment of the method provides a significant improvement, in particular, intensification, in comparison to the closest prior art, of the process of interaction between substances whether in the same or different states of matter (liquid - solid, liquid - gas, solid - gas) and a significant extension, in comparison to the closest prior art, of the nomenclature of available technological operations: in addition to drying and disintegration, the following operations can be performed:
- thermal treatment of various materials, including drying, pyrolysis, gasification, incineration, calcinations, and burning,
- wet treatment including washing,
- chemical treatment including reduction-oxidation, ion-exchange and substitution reactions, sorbent treatment, and catalytic treatment,
- mechanochemical treatment of materials, including granulation, disintegration, skinning etc.; and
- biological treatment including composting.

Due to a predetermined rate and/or duration of dropping and/or spilling the original raw material, thereat providing its continuous movement in between the surfaces of the inert filler bodies and/or through the bodies themselves, the method of invention provides, basing on anticipatorily obtained empirical dependences, creating a versatile method for processing various agricultural waste as well as other waste including municipal waste and industrial wood residue. Thereat, when changing from waste of one type to another, it is enough to change parameters of the movement of the original raw material in between the surfaces of the inert filler bodies and/or through the bodies themselves in the active zone and to control duration and/or intensity of the interaction between the original raw material and the gaseous agent in order to change the technological process of the original raw material in a substantial way.

Basing on these processes, a farming enterprise would be able not only to effectively process agricultural waste, but also to provide it with thermal energy in amounts sufficient for warming both farming premises and living spaces, as well as to obtain useful products from the processed waste, such as fertilizers, compost etc., or to provide services (or meet in-house needs) such as disinfection of planting material, conditioned drying of final products, e.g., breadstuff.

For a real-time control of running processes operations, it seems promising to form the shape and/or sizes of the active zone by providing certain motion conditions of the drum and/or inclination of the drum axis, and/or choosing the shape and/or sizes and/or material of the inert filler bodies, and/or choosing the number of the inner sections of the drum, and/or choosing the number and/or area and/or shape and/or sizes and/or location of the passage openings made in the partitions between neighboring sections of the drum.

As for controlling the duration of stay and/or the rate of dropping and/or spilling of the original raw material in the active zone, it seems reasonable to perform it by changing the rotation speed of the continuously rotating drum, or reversing the direction of its rotation, or changing the duration of its rotation, or adjusting pauses between rotation phases in case of pulse rotation of the drum.

It is convenient to control the duration of stay and/or the velocity of movement of the original raw material in the active zone by choosing the shape and/or sizes and/or material of the inert filler bodies.

Advantageously, the duration of stay and/or the velocity of movement of the original raw material in the active zone may be controlled by choosing the number of inner sections of the drum, and/or choosing the number and/or area and/or shape and/or sizes and/or location of the passage openings made in the partitions between neighboring sections of the drum.

It seems promising to control the duration and/or intensity of the interaction between the original raw material and the gaseous agent by introducing an active component (or several active components) in solid, liquid or gaseous state into the drum, e.g., in the form of a catalyst or a sorbent, said active component(s) being applicable onto the inner and/or outer surface of the inert filler bodies, and/or interposeable in between the inert filler bodies and/or within the inert filler bodies.

It seems reasonable to control the duration and or intensity of the interaction between the original raw material and the gaseous agent in the active zone by choosing the number of the inner sections of the drum, and/or the number and/or area and/or shape and/or sizes and/or location of the passage openings made in the partitions between neighboring sections of the drum.

It is convenient to control the duration and/or intensity of the interaction between the original raw material and the gaseous agent in the active zone by choosing the head of the flow of the gaseous agent or the stream velocity of the gaseous agent or the flow rate of the gaseous agent.

Advantageously, the duration or the intensity of the interaction between the original raw material and gaseous agent in the active zone may be controlled by the degree of filling the drum and/or separate sections of the drum with the inert filler bodies, and/or by the permeability of the inert filler bodies themselves, and/or by choosing the sizes of the inert filler bodies, and/or by choosing the shape and/or material of the inert filler bodies.

It seems promising to control the duration and/or intensity of the interaction between the original raw material and gaseous agent by changing the rate of circulation of the inert filler through the drum.

In creating the present invention, the task was assigned to create a versatile apparatus providing processing various materials, particularly agricultural waste of various types in any physical state (solid, liquid or gaseous), and free from the above shortcomings of the prior art.

In a versatile apparatus for processing materials comprising a drum filled with bodies of an inert filler and lengthwise divided into sections by traverse partitions with passage openings therein, the apparatus being furnished with an input and an output devices and a drive mechanism to drive the drum, the above-identified task is completed by that each section of the drum is charged with the inert filler bodies up to a level not lower than that of the edges of the passage openings in the traverse partitions in any working position of the drum, and holes are made in the end surfaces or in the side surface of the drum intended for feeding and emission of the gaseous agent.

Such a structure of the apparatus allows to implement the method of invention due to creating an active zone on the way of passage of the gaseous agent within the drum, and provides an active interaction between the original raw material and gaseous agent in the active zone.

To control the intensity of the interaction between the original raw material and gaseous agent, it is convenient to furnish the apparatus with an adjustable drive mechanism for rotating the drum, which drive mechanism being capable of providing the following operations: changing the rotation velocity of the drum and/or reversing its rotation and/or an angular displacement of the drum at a predetermined angle and/or stopping down the drum for a certain time period in the course of its motion.

To increase the degree of involving the original raw material present in the drum in the interaction with the gaseous agent, it seems promising to furnish the sections of the drum with shake-off plates mounted on the traverse partitions and to install interspersing blades on the inner surface of the drum.

To change the modes of the active zone in an expeditious manner, it seems reasonable that the area of the passage openings in the traverse partitions of the drum sections be changeable, which could be provided, e.g., using a structure of a multi-lobe septum, as used in photographic cameras to change the light flux through the object lens.

To enlarge the technological possibilities of the apparatus, it seems advantageous that the inert filler bodies used for different processes and/or used in different sections of the drum be made of different shapes and/or sizes and/or materials.

To make the variety of materials to be processed greater and the possibilities of the apparatus broader, it seems convenient to make the inert filler bodies in the form of hollow capsules with a perforated surface, within which particles of an inert material (e.g., ceramic or glass beads) and/or an activated substance, e.g., silica gel, catalyst etc. can be retained, and/or the activated substance can be applied on the inner and/or outer surface of the capsules.

### DESCRIPTION OF DRAWINGS

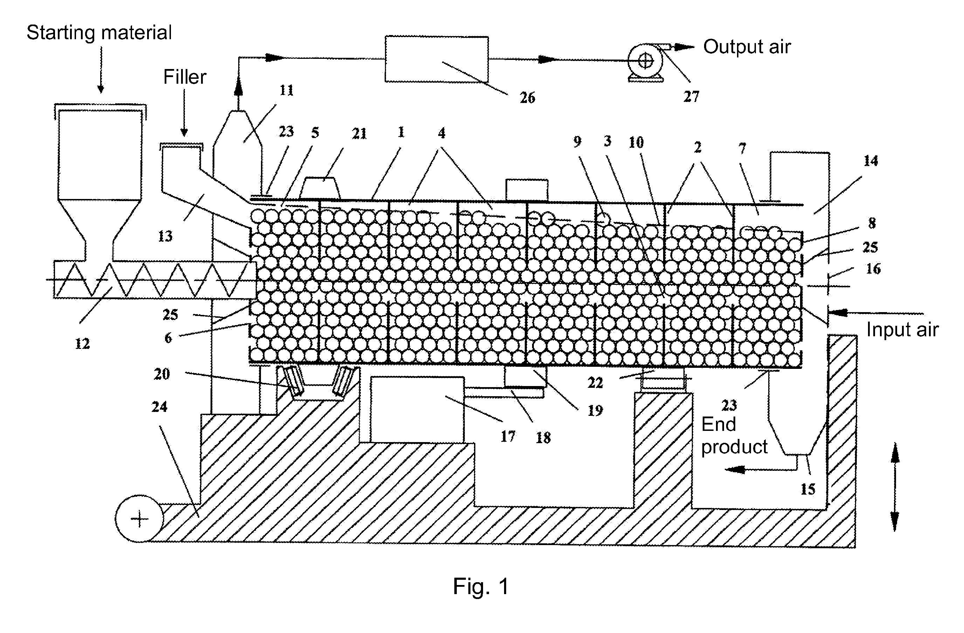

Figures1-8 clarify the essence of the invention.
Figure1 schematically shows an apparatus for drying products comprising: a drum 1 divided by traverse partitions 2 having passage openings 3 into working sections 4; an input section 5 having a perforated supporting wall 6; and an output section 7 having a perforated supporting wall 8, each section 4 being filled with filler bodies 9 up to a dynamic filling level 10; a loading unit 11 having an auger-type loading device 12 and a loading chamber 13 adapted to receive the filler bodies 9; an unloading unit 14 having an unloading opening 15 and an air-intake opening 16; a drive mechanism including a geared motor 17 having a pinion-shaft 18 and a toothed ring 19, as well as thrust-bearing rollers 20, which train about a thrust crown 21, and bearing rollers 22; sealing units 23; a movable support platform 24 adapted to rotate around an axis; fixing support plates 25 for fixing the perforated supporting walls 6 and 8; an air cleaner 26; and an air fan 27.

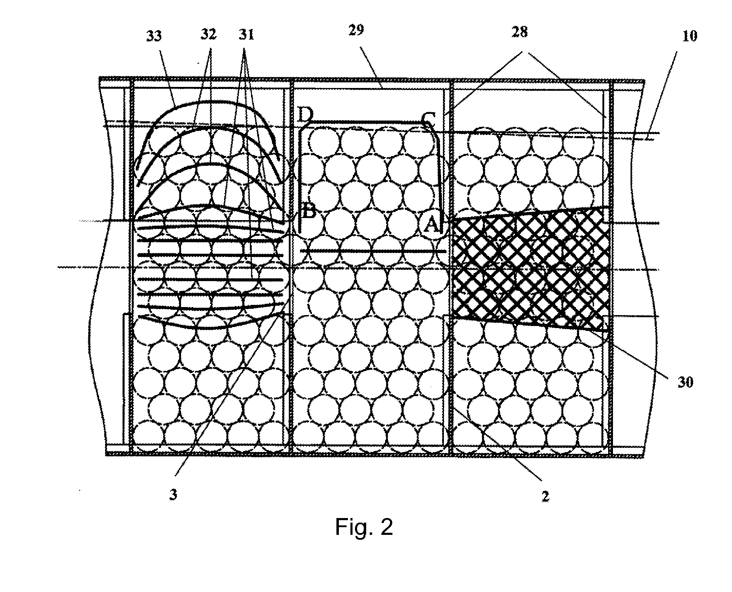

Figure2 schematically shows a fragment of an axial section of the drum clarifying the principle of creating an active zone and flow lines of gas streams, in the figure being shown: shake-off plates 28; interspersing blades 29; an active zone 30; a main gas stream flow 31; and secondary gas stream flows 32 and 33.

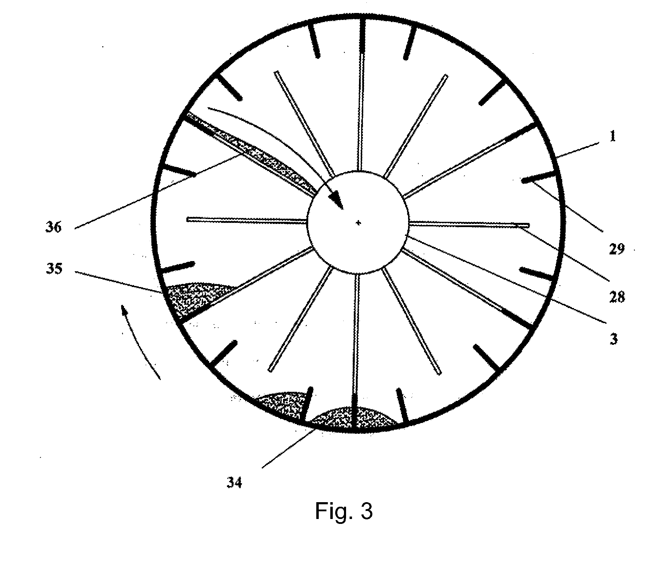

Figure3 schematically shows a cross section of the drum (the filler not shown) clarifying the principle of operating of the shake-off plates 28 and interspersing blades 29, in the figure being illustrated the processed material 34 and 35 accumulated at the side surface of the drum and 36 pouring on a shake-off plate.

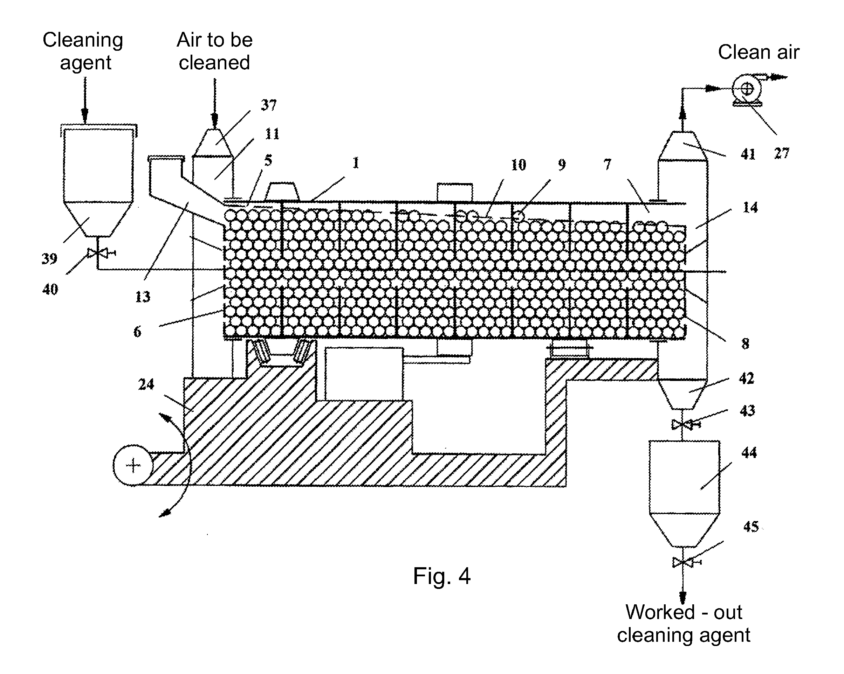

Figure4 shows an apparatus for liquid cleaning of air from ammonia additionally comprising: an air-intake chamber 37 installed on the loading unit 11; reservoir 39 adapted to contain a liquid cleaning agent having a tap 40; an air-tapping chamber 41; a drawing-off chamber 42, configured to draw off the worked-out liquid cleaning agent, having a tap 43; and a dump tank 44 having a tap 45.

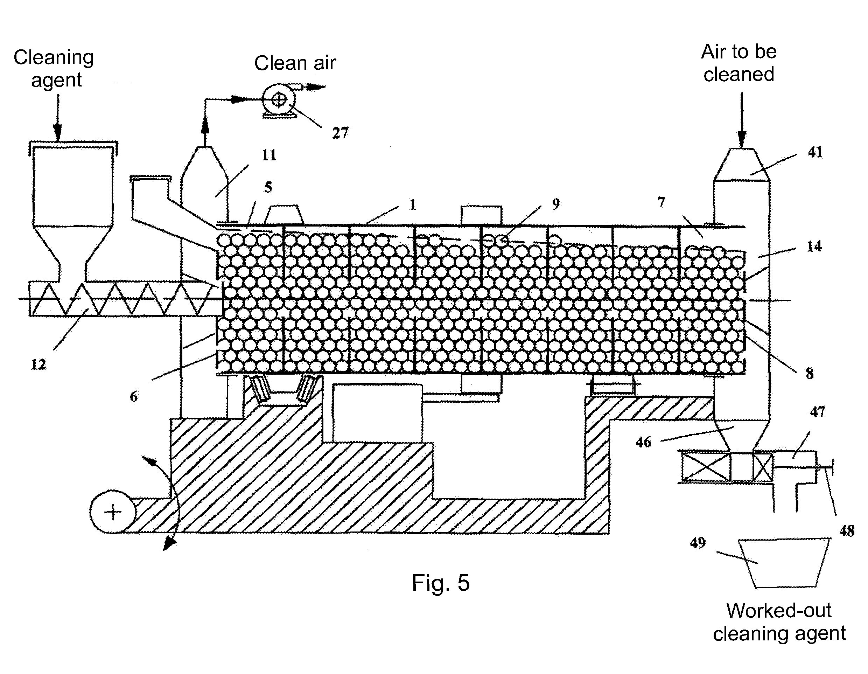

Figure5 shows an apparatus for powder cleaning of air from ammonia additionally comprising: a drawing-off chamber 46 to draw off the worked-out cleaning agent; a portioning unit 47 having a push rod 48; and a reservoir 49 for packing a dry fertilizer.

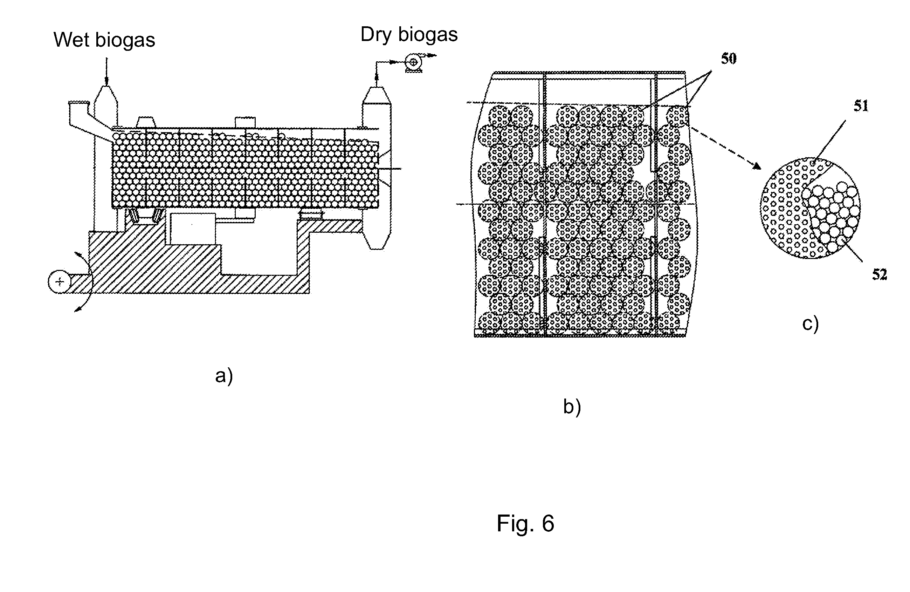

Figure6 shows an apparatus for desiccating biogas obtained from a reactor after bioprocessing, e.g., manure additionally comprising: hollow filler spheres 50 perforated with multiple holes 51 and filled with silica gel granules 52.

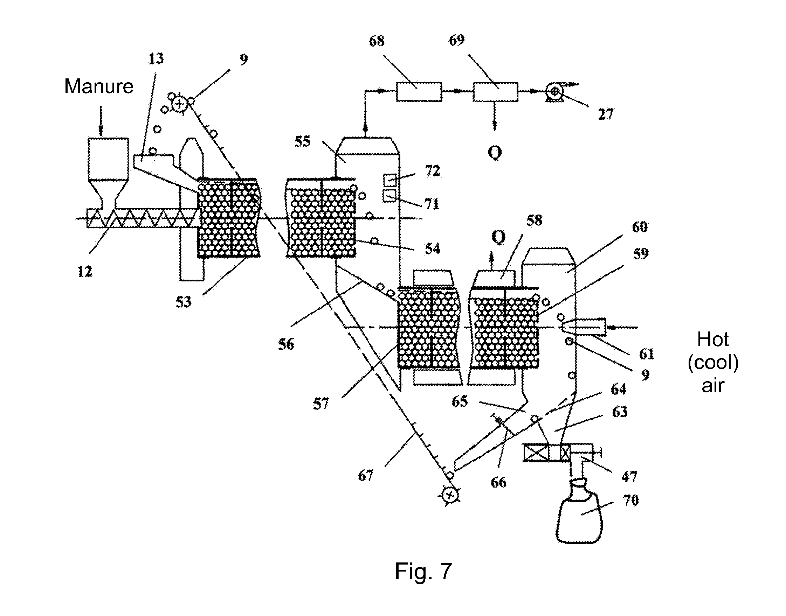

Figure7 shows a diagram of a two-drum apparatus for incineration of manure to obtain thermal energy (movable support platform is not shown) comprising: a left drum 53 having a perforated wall 54; a central head 55 having a trough-like guide 56; a right drum 57 having a heat-exchange unit 58 and a perforated wall 59; a right head 60 having an imblazing burner 61, an ash bunker 63, a grid 64, a throw-off tray 65, and a shutter 66; a conveyor 67 to lift filler; a thermal gas reactor 68; a heat-exchange unit 69; an ash receptacle 70; a CO₂ detector 71; and an O₂ detector 72.

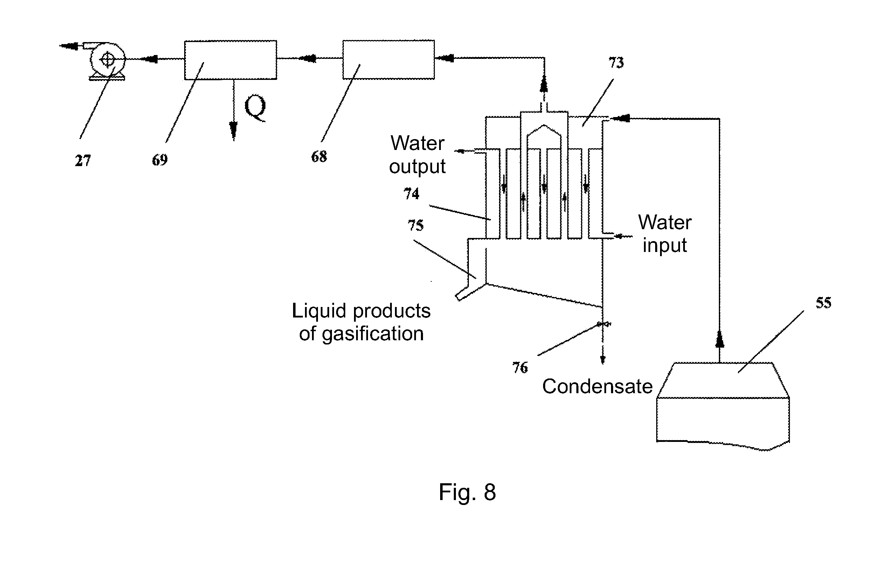

Figure8 shows a diagram of a two-drum apparatus modified as compared to the apparatus shown in Figure7, due to the modification being additionally provided the gasification of waste in order to obtain, e.g., boiler fuel and thermal energy. This apparatus differs from that of Figure7 in that it is furnished with a refrigerator 73 having water-cooled ribs 74 on which liquid products of waste gasification are condensed, which products flow through a duct 75, a water condensate flowing through a drain valve 76.

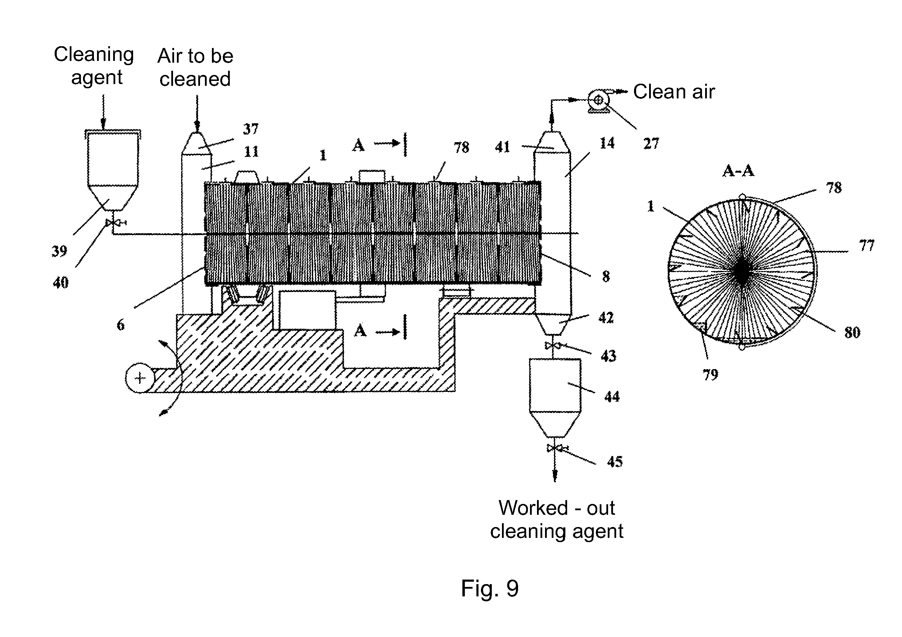

Figure9 shows an apparatus for liquid cleaning of air from ammonia. This apparatus differs in that it has a fixed filler 77 in the form of cylindrical swabs placed within each section of a drum 1 through sector access holes 78. To lift spilled liquid 79 from the bottom of the drum 1, lifting trough-shaped blades 80 are used which are located on the inner surface of the drum 1, each of which being fixed at an angle to the surface normal in the point of fixation in order to form a kind of containers for lifting the liquid to a required height.

### BEST EMBODIMENT OF INVENTION

The embodiment of the method related to the invention will be described for the apparatus illustrated in Figures1-3.

Figure1 shows an apparatus for drying products, such as, e.g., cereals, pomaceous fruits or legumes. Besides, it can be used for drying, e.g., manure, fowl dung and the like. A drum 1 of the apparatus is preliminarily inclined by a movable support platform 24 and filled with filler bodies 9 formed, e.g., as spheres of a diameter of 30 mm to 150 mm, the bulk density whereof being 100 kg/m³ to 1000 kg/m³. For this end, the filler bodies 9 are poured into a loading chamber 13, the drum 1 being rotating. The drum 1 is driven into rotation by a geared motor 17 having a main drive pinion-shaft 18 and a toothed ring 19 fixed to the body of the drum 1. To keep a dynamic filling level 10 of the inert filler bodies 9, fixed supporting walls 6 and 8 are used in an input section 5 and output section 7, respectively, the walls 6 and 8 being fixedly attached to a loading unit 11 and unloading unit 14, respectively, using support plates 25. Due to the inclined position of the drum 1 provided by the movable support platform 24, the inert filler bodies 9 gradually fill the inner space of sections 4, 5, and 7 up to the level 10 through passage openings 3 in partitions 2. To prevent the drum 1 from its axial displacement during the rotation, thrust-bearing rollers 20 and a thrust crown 21 are used, bearing rollers 22 providing a smooth rotation of the drum 1, which freely lies on the rollers 22. As soon as all the sections of the drum 1 are filled with the inert filler bodies 9, the process of drying original raw material may be started. For this end, the original raw material is fed into the input section 5 through an auger-type loading device 12 and begins to pour in between the spherical inert filler bodies 9. Due to that specific characteristics of the apparatus (namely: the rotation velocity and operation modes of the drum 1, the angle of incline of the axis of the drum 1, the diameter of the spherical inert filler bodies 9 and the material of which they are made, the sizes of the passage openings 3 in the partitions 2, and the dynamic level 10 up to which the inert filler bodies 9 fill the sections 4, 5, and 7) have been empirically selected for the corresponding original raw material to be processed, air flow created by an air fan 27 moves from an air-intake opening 16 through the passage openings 3 along the shortest route A-B (see Figure2) and creates a main axial gas stream flow 31 through an active zone 30 but not within the zone of curved secondary gas stream flows 32 and 33.

By controlling the velocity of rotation of the drum 1 and changing the direction of the rotation, such conditions of a permanent pouring of the original raw material in the active zone 30 are created that most of the time of the presence of the material to be processed in the drum 1 it is present in the active zone 30 where it is subject to an intensive interaction with the main gas stream flow 31, consequently, the process of drying the material accelerates. Interspersing blades 29 are provided in the apparatus which, when the original raw material is poured into the active zone 30, catch the material at the side surface of the drum 1 (see Figure3) and lift it up, from where the material pouring from the blades 29 and shake-off plates 28 at the partitions 2 is introduced in between the inert filler bodies 9 again and falls into the active zone 30 and, at the same time, due to the inclined position of the drum 1, it is pouring through the passage opening 3 in the partition 2 and falls into the next section 4 or 7. Thus, in the end of its way from the input section 5 to its output section 7, the original raw material is completely dried. From the output section 7, the dried material is poured into the unloading unit 14 through the perforated wall 8 and is removed from the apparatus through an unloading opening 15.

Now the method of invention will be described as exemplified in Figure4 showing an apparatus for liquid cleaning of air from gas contaminants such as ammonia. Subject to cleaning ammonia-containing air enters a drum 1 through an air-intake chamber 37 mounted on a loading unit 11 and through a perforated wall 6 from, e.g., a livestock house, the drum being preliminarily filled with inert filler bodies 9. From a reservoir 39 for a liquid cleaning agent, a weak solution (3-5%) of nitric acid enters the drum 1 through a tap 40. The nitric acid solution is poured in between the inert filler bodies 9 and, due to the rotation of the drum, being continuously poured in between the inert filler bodies 9, the nitric acid solution generally rests within the active zone 30 on the way of the main gas stream flow 31 (see Figure2) actively interacting with ammonia contained in the air to be cleaned entering from the air-intake chamber 37 generally along the axis of the drum 1 into an air-tapping chamber 41 and to an air fan 27. A chemical reaction between the nitric acid and ammonia results in a solution of ammonia nitrate (NH₄NO₃) which flows into a drawing-off chamber 42 through the perforated wall 42. The ammonia nitrate solution is poured into a dump tank 44 by periodically opening a tap 43. The ammonia nitrate solution is a nitric fertilizer which in a liquid form can be used to diet plants.

Now the method of invention will be described as exemplified in Figure5 showing an apparatus for powder cleaning of air from ammonia. Subject to cleaning ammonia-containing air, e.g., from a live-stock house, enters into a drum 1 through an air-tapping chamber 41 mounted on a loading unit 14 and a perforated wall 8, the drum 1 being filled with inert filler bodies 9 and powder cleaning agent such as zeolite impregnated with nitric acid and preliminarily dried. The apparatus works similarly to the apparatus shown in Figure1. In this case, zeolite serves as a carrier powder which becomes a bulky nitric fertilizer (NH₄NO₃) upon a reaction of nitric acid with ammonia, which fertilizer can be immediately pre-packed in measuring containers using a portioning unit 47 having a push rod 48. In a wet soil, such a fertilizer would deliver ammonia nitrate for a long time, zeolite improving the soil structure.

For desiccating biogas, an apparatus shown in Figure6 can be used. This apparatus almost repeats the discussed above apparatus shown in Figure4, from which it differs in that instead of a cleaning agent silica gel granules 52 are used placed in filler spheres 50 perforated with multiple holes 51. When water vapor present in the biogas passes through the multiple holes 51, it is caught by the silica gel granules 52, and desiccated biogas having an increased calorific value is directed to the consumer.

To incinerate manure in order to obtain thermal energy, a two-drum apparatus shown in Figure7 can be used, the drums of the apparatus being filled with high calorific receptivity filler bodies such as steel or crude-iron balls. Through an auger-type loading device 12, manure enters a left drum 53 where it is pre-dried by the heat of hot filler bodies 9 coming from a right drum 57. From here, manure together with the filler bodies 9 enters the right drum 57 through a perforated wall 54 and a trough-like guide 56. In the right drum 57, the dry manure is heated up to a temperature above 400°C by hot air supplied through a burner 61, a shutter 66 being closed. Hereupon, spontaneous combustion of the manure starts. The process of combustion of the manure is controlled by a CO₂ detector 71 and an O₂ detector 72. When predetermined values of CO₂ and O₂ content are achieved, the supply of hot air through the burner 61 is cut off, the shutter 66 is opened, and the drums are driven into rotation. Heated filler bodies 9 through a conveyor 67 are transported from the drum 57 into a loading chamber 13. The rate of arrival of the filler bodies 9 into the loading chamber 13 and the rate of the circulation thereof through the drums 53 and 57 are controlled by their excess (quantitative superiority) over the number of the filler bodies present within the drums 53 and 57 and by the velocity of rotation of the drum. Due to the presence of heated filler bodies 9 in the drum 53, the rate of drying the manure within this drum increases. Excessive filler bodies 9, run-out of thermal energy in the drum 53, roll down over the perforated wall 54 into a central head 55 having a trough-like guide 56, from where they are transported into the drum 57, where they are heated again by thermal energy of the burning manure, excessive filler bodies 9 leaving through a head 60 along a grid 64 that covers an ash bunker 63. The manure pre-dried in the drum 53 arrives into the drum 57 through the perforated wall along the trough-like guide 56 together with filler bodies 9. Further, moving in the drum 57 to a perforated wall 59, the manure is combusted in an air countercurrent flow coming through the perforated wall 59. To extract heat from the drum 57, a fixedly mounted heat-exchange unit 58 is provided configured to collect the heat coming from the outer surface of the drum 57 both by convection and irradiation. Hot air from the drum 57 through the central head 55 arrives into a thermal gas reactor 68, which, in case of the presence of CO in high concentrations which is detected by a CO detector (not shown), after-burns the gas into CO₂, thus increasing the temperature even more. An air fan 27 sucks hot gases through a heat-exchange unit 69, thus contributing to the transfer of the thermal energy of the air flow to the heat-exchange unit, whereafter the gases, run-out of thermal energy, are vented to the atmosphere. Ash falling out of the drum 57 through the perforated wall 59 and grid 64 arrives into a portioning unit 47 and then is packaged in receptacles 70. Thus, the apparatus provides for incineration of excessive manure and producing thermal energy that can be used to warm living quarters and industrial premises, therewith, ash can be used as an inorganic fertilizer. Similar to the above, other materials, such as straw (pre-shredded), industrial wood residue, bioreactor waste, winemaking waste, municipal waste etc. can be incinerated in such an apparatus. All these wastes should be pre-shredded desirably to particle sizes allowing to be poured in between the filler bodies and/or through the bodies themselves, and the waste should be sufficiently dry to enable the burning process. In case wastes with different calorific capacity are available, it seems reasonable to add waste of a higher calorific capacity to waste of a lower calorific capacity (or wetter waste).

Comparatively large enterprises, which produce so much waste that it is unreasonable to incinerate it all (as so much thermal energy is not needed), can use the technology of gasification of organic materials in order to obtain useful energy carrying products (pyrolytic resins) therefrom, which could be used, e.g., as a boiler fuel. To this end, an apparatus shown in Figure8 may be used, which, as distinct from that shown in Figure7, works as a gasification apparatus. To implement a gasification mode, air is fed into a drum 57 in amount sufficient to maintain (at the cost of partially burning carbon to CO₂) a temperature sufficient to gasify carbon (about 1000°C) within the drum. In this case, pyrolysis of organic components of the waste, at the cost of the thermal energy of hot gases arising from the burning of carbon, takes place in the left part of the drum 57. The thermal decomposition of the organic components of the waste results in producing volatile products of pyrolysis. Solid residue of pyrolysis, which is a coke-like aggregation, partially burns down in the central and right parts of the drum 57, the rest carbon being gasified by an additional gasification agent, e.g., water vapor, fed through a burner 61. Said gasification agent is fed in an amount sufficient for converting all the rest carbon into carbon monoxide (CO). The process of carbon burning down is controlled by CO₂ and CO detectors and the content of the ash residue, which shall not contain carbon. Gasification products, known as "product gas", from the central head 55 arrive into a refrigerator 73 cooled with water circulating through ribs 74. Due to a quick cool-down, liquid hydrocarbons and water are condensed from the product gas, which hydrocarbons are known as pyrolysis resins, said hydrocarbons and water being separated in the lower part (basin) of the refrigerator 73. Settled water is drained through a drain valve 76. Liquid products of gasification (pyrolysis resins) are poured off through a duct 75. They can be used, e.g., as an alternative boiler fuel. Non-condensable combustible components of the product gas are after-burned in a thermal gas reactor 68 in the same way as in the apparatus illustrated in Figure7.

To clean air from ammonia, an apparatus shown in Figure9 can be used, which, as distinct from that shown in Figure4, uses a fixed filler 77 with cylindrical swabs used, e.g., as a drum-type catcher like those used in garbage trucks collecting dirt and dust in the streets, the swabs being formed from two or more intertwined cords, polymer or metal filaments being diametrically constricted therebetween. Ammonia-containing air is input through an air-intake chamber 37 mounted on a loading unit 11 through a perforated wall 6 of a drum 1, the drum 1 being pre-loaded with the filler 77 through sector access holes 78. From a reservoir 39 for a liquid cleaning agent, a weak solution of nitric acid enters the drum 1 through a tap 40. Being present on the surface of the filaments of the filler 77, the nitric acid reacts with the ammonia arriving with the flow of air to be cleaned flowing from the air-intake chamber 37 along the axis of the drum 1 through an air-tapping chamber 41 to an air fan 27. To extend the time of the interaction between the cleaning agent and ammonia, liquid 79 accumulated on the bottom of the drum is lifted up by blades 80 and both flows down along the filler filaments again and is transferred to a perforated wall 8 with air flow along the axis of the drum. The reaction between the nitric acid and ammonia results in appearing a solution of ammonia nitrate which flows into a drawing-off chamber 42 through the perforated wall 8.

### INDUSTRIAL APPLICABILITY

Thus, the method and apparatus of invention allow creating a new technology of processing waste of different types, and a versatile apparatus configured to implement the method of invention in agricultural, wood-working and other enterprises where solid, liquid, or gaseous waste is produced which could be processed into marketable products.

## Claims

1. A versatile method for processing materials in a sectioned drum-type apparatus, the drum being divided into sections by partitions with passage openings therein, the method comprising the steps of: feeding an original raw material, inert filler bodies, and a gaseous agent into the apparatus; putting the apparatus in operation; and creating a gas flow through the apparatus, **characterized in that** the method includes the operations of: filling the sections of the apparatus, partially or entirely, with the inert filler bodies up to a level higher than the level of the passage openings; forming an active zone on the way of the gas flow, where the original raw material is dropped and/or spilled with a predetermined rate and/or during a predetermined time period, thus providing its movement in between the surfaces of the inert filler bodies and/or through the bodies themselves; and controlling the duration and/or intensity of the interaction between the original raw material and the gaseous agent.

2. The method according to claim 1, **characterized in that** the shape and/or sizes of the active zone are formed by providing certain motion conditions of the drum and/or inclination of the drum axis, and/or choosing the shape and/or sizes and/or material of the inert filler bodies, and/or choosing the number of the inner sections of the drum, and/or choosing the number and/or area and/or shape and/or sizes and/or location of the passage openings made in the partitions between neighboring sections of the drum.

3. The method according to claim 1, **characterized in that** the duration of stay and/or the velocity of movement of the original raw material in the active zone in case of continuous rotation of the drum is controlled by changing the velocity of rotation of the drum.

4. The method according to claim 1, **characterized in that** the duration of stay and/or the velocity of movement of the original raw material in the active zone is controlled by reversing the drum rotation direction, or changing the duration of its rotation, or adjusting pauses between rotation phases in case of pulse rotation of the drum.

5. The method according to claim 1, **characterized in that** the duration of stay and/or the velocity of movement of the original raw material in the active zone is controlled by choosing the shape and/or sizes and/or material of the inert filler bodies.

6. The method according to claim 1, **characterized in that** the duration of stay and/or the velocity of movement of the original raw material in the active zone is controlled by choosing the number of the inner sections of the drum, and/or choosing the number and/or area and/or shape and/or sizes and/or location of the passage openings made in the partitions between neighboring sections of the drum.

7. The method according to claim 1, **characterized in that** the duration and/or intensity of interaction between the original raw material and the gaseous agent is controlled by introducing an active component in solid, liquid or gaseous state into the drum, e.g., in the form of a catalyst or a sorbent, said active component being applicable onto the inner and/or outer surface of the inert filler bodies, and/or interposeable in between the inert filler bodies and/or within the inert filler bodies.

8. The method according to claim 1, **characterized in that** the duration and/or intensity of interaction between the original raw material and the gaseous agent in the active zone is controlled by choosing the number of the inner sections of the drum, and/or the number and/or area and/or shape and/or sizes and/or location of the passage openings made in the partitions between neighboring sections of the drum.

9. The method according to claim 1, **characterized in that** the duration and/or intensity of interaction between the original raw material and the gaseous agent in the active zone is controlled by choosing the head of the flow of the gaseous agent or the stream velocity of the gaseous agent or the flow rate of the gaseous agent.

10. The method according to claim 1, **characterized in that** the duration and/or intensity of interaction between the original raw material and the gaseous agent in the active zone is controlled by the degree of filling the drum and/or separate sections of the drum with the inert filler bodies, and/or by the permeability of the inert filler bodies themselves, and/or by choosing the sizes of the inert filler bodies, and/or by choosing the shape and/or material of the inert filler bodies.

11. The method according to claim 1, **characterized in that** the duration and/or intensity of interaction between the original raw material and the gaseous agent in the active zone is controlled by changing the rate of circulation of the inert filler through the drum.

12. A drum-type apparatus comprising a drum filled with inert filler bodies and lengthwise divided into sections by traverse partitions with passage openings therein, the apparatus being furnished with an input and an output devices and a drive mechanism to drive the drum, **characterized in that** each section of the drum is charged with the inert filler bodies up to a level not lower than that of the edges of the passage openings in the traverse partitions in any working position of the drum, and holes are made in the end surfaces or in the side surface of the drum intended for feeding and emission of the gaseous agent.

13. The apparatus according to claim 12, **characterized in that** the apparatus is furnished with an adjustable drive mechanism for driving the drum, which drive mechanism being capable of providing the following operations: changing the rotation velocity of the drum and/or reversing the direction of its rotation and/or an angular displacement of the drum at a predetermined angle and/or stopping down the drum for a certain time period in the course of its motion.

14. The apparatus according to claim 12, **characterized in that** the sections of the drum are furnished with shake-off plates mounted on the traverse partitions.

15. The apparatus according to claim 12, **characterized in that** the sections of the drum are furnished with interspersing blades installed on the inner surface of the drum.

16. The apparatus according to claim 12, **characterized in that** the area of the passage openings in the traverse partitions of the drum sections is changeable.

17. The apparatus according to claim 12, **characterized in that** the inert filler bodies used for different processes and/or used in different sections of the drum are made of different shapes and/or sizes and/or materials.

18. The apparatus according to claim 12, **characterized in that** the inert filler bodies are made in the form of hollow capsules with a perforated surface, within which particles of an inert material and/or an activated substance is retained, and/or the activated substance is applied on the inner and/or outer surface of the capsules.
